# EUROPEAN PATENT SPECIFICATION

(11) **EP 2 175 169 B1**
(45) Date of publication and mention of the grant of the patent: **06.11.2013**
(21) Application number: 09170782.8
(22) Date of filing: 21.09.2009
(51) Int. Cl.: F16H 55/48, F16C 13/00, F16H 55/40, F16C 35/067

(54) **Pulley and rolling bearing with resin pulley**
Riemenscheibe und Kugellager mit einer Riemenscheibe aus Kunststoff
Poulie et palier à roulement doté d'une poulie en résine

(30) Priority: 07.10.2008 JP 2008260499; 05.11.2008 JP 2008284202
(43) Date of publication of application: 14.04.2010
(73) Proprietor: NTN Corporation, Osaka-shi, Osaka (JP)
(72) Inventor: Nakagawa, Tomokazu, Iwata-shi Shizuoka (JP); Furukawa, Katumi, Iwata-shi Shizuoka (JP); Mineno, Katsunori, Iwata-shi Shizuoka (JP); Hayakawa, Hisashi, Iwata-shi Shizuoka (JP)
(74) Representative: Grünecker, Kinkeldey, Stockmair & Schwanhäusser

(56) References cited:
- EP-A2- 1 076 191
- EP-A2- 1 980 760
- DE-A1- 10 360 290
- JP-A- 2000 161 472
- JP-U- H0 614 609
- US-A- 4 668 209
- US-A- 5 630 769

## Description

### BACKGROUND OF THE INVENTION

This invention relates to a method of manufacturing a pulley for guiding e.g. a timing belt for driving cams of an automotive engine, a pulley formed by said method, a rolling bearing including a resin pulley member integrally formed on the radially outer portion of the outer race of the bearing by resin molding, and a mold of implementing the method as mentioned above.

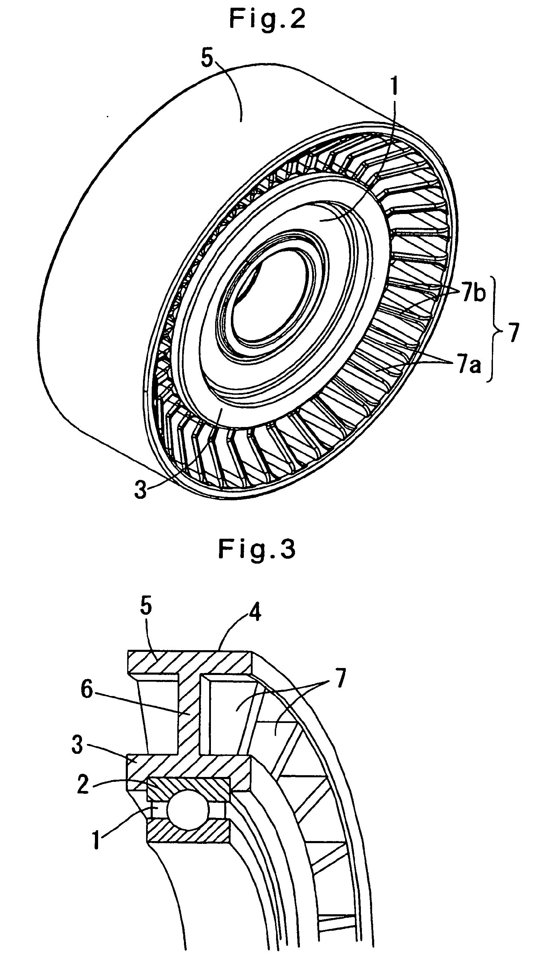

Pulleys are used to guide timing belts for driving cams of automotive engines, engine accessory belts for driving engine accessories such as an alternator, etc. As shown in Fig. 3, a typical pulley of this type comprises a radially inner cylindrical portion 3 fixed to an outer race 2 of a rolling bearing 1, a radially outer cylindrical portion 5 having a belt guide surface 4, a disk portion 6 formed between the radially inner and outer cylindrical portions 3 and 5, and a plurality of radial ribs 7 formed on the disk portion 6. The ribs 7 reinforce the disk portion 6, thereby ensuring strength of the pulley when loads are applied to the radially outer cylindrical portion 5 from the belt.

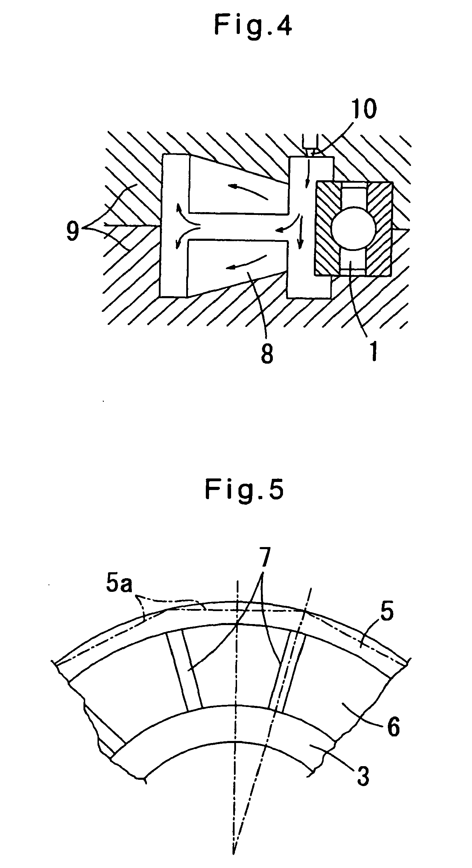

Such a pulley is ordinarily made of resin and molded using a mold 9 having a cavity 8 in which the respective portions of the pulley are integrally formed, as shown e.g. in Fig. 4. The mold 9 has a plurality of gate holes 10 through which molten resin is injected into the cavity. The molten resin injected into the cavity 8 through the gate holes 10 is cooled in the cavity 8 and its volume decreases. The higher the reduction rate of the resin temperature, the higher the volume reduction rate of the resin.

Thus, at portions of the cavity 8 where resin has reached keeping its high temperature, since the resin is cooled from the high temperature to room temperature, its volume reduction rate is high. But at portions where resin has reached after cooled down to a somewhat lower temperature, since the resin is cooled from the lower temperature to room temperature, its volume reduction rate is low.

When the volume of the resin in the cavity 8 decreases unevenly in this manner, as shown in Fig. 5, the roundness of the radially outer cylindrical portion 5 decreases (as shown by numeral 5a in Fig. 5), which in turn makes smooth rotation of the pulley difficult. JP Patent Publications 4-34260A (Publication 1) and 2008-149502A (Publication 2) propose to modify the positions of the gate holes 10 through which molten resin is injected into the cavity 8 in order to minimize such uneven distribution of the volume reduction rate in the cavity.

In Publication 1, a gate hole 10 is formed in the portion between every circumferentially adjacent pair of the ribs 7 at a circumferentially symmetrical position (intermediate position) so that molten resin can be uniformly injected into the cavity through the respective gate holes 10. Thus, resin injected through the respective gate holes 10 can be uniformly distributed in all directions in the cavity i.e. uniformly distributed to the radially inner and outer cylindrical portions 3 and 5 and to every rib 7. This increases the roundness of the radially outer cylindrical portion 5.

In Publication 2, seven or more gate holes 10 are formed along an imaginary circle having its center located on the rotation axis at equal angular intervals, and resin is injected into the cavity through these gate holes 10. Preferably, an odd number of gate holes 10 are formed so that weld portions (low shrinkage) and flow portions (high shrinkage) are arranged symmetrically with respect to the rotation axis, thereby further increasing the roundness.

In either of the arrangements of Publications 1 and 2, because the gate holes 10 are arranged at equal intervals, the outer diameter of the radially outer cylindrical portion 5 tends to periodically (corresponding to the distances between the adjacent gate holes 10) varies corresponding to the distance between the respective gate holes 10 and the radially outer cylindrical portion 5. This variation in outer diameter is so small as not to influence the rotation of the pulley itself.

But this small variation in outer diameter may cause periodic sounds while the pulley is rotating.

That is, if the radially outer cylindrical portion 5 is completely round, the pulley produces a sound of a predetermined frequency while the pulley is rotating at a constant speed according to its shape, material, etc. On the other hand, if the radially outer cylindrical portion is even slightly not round, according to the degree of non-roundness (variation in outer diameter), sounds of different frequencies are simultaneously produced. If this variation is periodic, these plurality of sounds interfere with each other, thus producing a new sound (beat) of the same frequency as the above variation. This beating sound is recognized by human ears as a periodic variation in the volume of the sound. Such variation in volume tends to be extremely offensive to human ears and gives people an impression of increased noise level.

Because this beating sound is produced due to a very small periodic variation in the outer diameter of the radially outer cylindrical portion, it is possible to control this beating sound by making the radially outer cylindrical portion completely or almost completely round. But in order to make the radially outer cylindrical portion completely or almost completely round, the manufacturing cost increases.

The document DE 103 60 290 A1 discloses the features of the preamble of claim 1.

An object of this invention is to suppress the above-mentioned beating sound in a simple manner at a low cost.

### SUMMARY OF THE INVENTION

This object is solved by the features of claim 1.

Further improvements are laid down in the subclaims.

A pulley manufactured by the method according to the invention has the advantage that, the beating sound is suppressed by making a plurality of sounds of different frequencies less likely to interfere with one another

Interference of a plurality of sounds of different frequencies tends to occur while the outer diameter is fluctuating with a periodicity. This is because the phases of such plurality of sounds tend to coincide with one another due to the periodicity. Thus, by intentionally shifting this periodicity, it is possible to prevent beating sounds due to interference of the plurality of sounds.

Even if the periodicity of the outer diameter is shifted, its roundness remains basically unchanged. This is because the roundness is defined as the difference between the maximum and minimum diameters, and the maximum and minimum diameters remain basically unchanged even if the periodicity is shifted. Thus, even if the periodicity is shifted, smoothness of rotation of the pulley is never influenced.

The term "rotational asymmetry" means that the outer diameter does not have any particular rotation axis, such as a six-fold rotation axis (60° rotational symmetry), a four-fold rotation axis (90° rotational symmetry), or a three-fold rotation axis (120° rotational symmetry). By making the outer diameter rotationally asymmetric, a plurality of sounds produced from the pulley become less likely to interfere with each other, so that it is possible to suppress beating sounds.

According to the inventive method, a molten material is injected into a mold through gate holes formed in the mold so as to be rotationally asymmetric about the rotation axis, and cured in the mold, wherein not all of the gate holes have the same diameter.

With this arrangement, it is possible to inject different amounts of resin through the respective gate holes, which in turn makes it possible to unevenly inject resin through the respective gate holes, thereby ensuring rotation asymmetry of the outer diameter of the radially outer cylindrical portion in the same manner as when the gate holes are arranged so as to be rotationally asymmetic.

At the radially outer portion of the radially outer cylindrical portion, the nearer to the corresponding gate hole, the higher the temperature of the resin when it reaches the radially outer portion, and thus the larger the degree of shrinkage. Thus, if the gate holes are formed periodically as in the case with Publication 1, periodicity develops at the outer diameter corresponding to the periodicity of the positions of the gate holes. In contrast, by arranging the gate holes so as to be rotationally asymmetric, because resin is injected unevenly, the outer diameter becomes rotationally asymmetric.

A pulley formed by the above method has injection marks corresponding to the respective gate holes.

In an embodiment the number of the ribs is not a multiple of the number of the injection marks corresponding to the gate holes.

If the number of the ribs is a multiple of the gate holes, for example, if the pulley has 30 ribs and the mold has six gate holes, molten resin injected through each gate hole is used to form an average of five ribs, Since the distances from each gate hole to the respective five ribs are slightly different from one another, the outer diameter fluctuates slightly corresponding to the above five different distances. Further, because there are six sets of "one gate hole and five ribs", with the respective sets being arranged so as to be in 60° rotationally symmetrical relationship, the outer diameter becomes rotationally symmetrical for every 60° rotation period. As a result, beating sounds are produced due to this rotational symmetry.

In contrast, in the arrangement in which the number of the ribs is not a multiple of the number of the gate holes, the number of ribs formed by resin injected through at least one or each of some gate holes is different from the number of ribs formed by resin injected through each of other gate holes, so that the outer diameter becomes rotationally asymmetric. Beating sounds are thus suppressed.

In a further embodiment, the number of the ribs is set to be a prime number that is different from the number of the injection marks corresponding to the gate holes.

With this arrangement, since a prime number is a number whose factors are only 1 and itself, the number of ribs formed by resin injected through at least one or each of some gate holes is different from the number of ribs formed by resin injected through each of other gate holes, so that the outer diameter becomes rotationally asymmetric. Beating sounds are thus suppressed. Further, because the number of the ribs is a prime number, it is possible to suppress resonance with engine parts, thus further improving quietness.

In another embodiment, not all of the ribs may have the same thickness.

Portions of the resin injected into the cavity through the gate holes pass between the adjacent ribs and are supplied to the radially outer cylindrical portion. Since not all the ribs are equal in thickness, the portions of the resin that flow between thicker ribs flow at a slower speed than the portions of the resin that flow between thinner ribs, and thus is cooled. Thus, by varying the thicknesses of the ribs, the outer diameters of the radially outer cylindrical portion corresponding to the ribs become uneven, which in turn ensures rotational asymmetry of the outer diameter.

The pulley may be made of any material provided the material can be molded into the pulley by injection and curing in the mold. But the pulley is preferably made of a resin because a resin is easily moldable and also the pulley made of a resin is lightweight.

The resin used for the pulley is not particularly limited. But for a lower cost, a nylon resin is preferable. For higher strength, a phenolic resin is preferable. Although a nylon resin is slightly lower in strength than a phenolic resin, it is possible to increase the strength of a pulley made of a nylon resin to a sufficient level by providing the reinforcing ribs between the radially inner and outer cylindrical portions.

The present invention also provides a rolling bearing with any of the above-mentioned pulleys, wherein the rolling bearing includes an outer race, and wherein the pulley is integrally formed on the outer race by injection molding a resin.

In order to integrally form the pulley on the bearing, a mold for molding the pulley is prepared in which the outer race of the bearing can be mounted so that by injecting a resin into the mold, the pulley made of this resin is fixed to the outer race. With this arrangement, when the pulley is formed, the pulley is simultaneously fixed to the bearing, so that the bearing with the pulley can be easily formed.

The mold for forming the pulley according to the present invention has a cavity for integrally forming a radially inner cylindrical portion fixed to the outer race of a rolling bearing, a radially outer cylindrical portion having a belt guide surface, a disk portion formed between the inner and outer cylindrical portions, and radial ribs formed on the disk portion by injecting a molten material such as resin into the cavity and curing it. The cavity is preferably structured such that the outer diameter of the radially outer cylindrical portion is rotationally asymmetric.

By molding a resin in this mold, it is possible to form a pulley of which the radially outer cylindrical portion has a rotationally asymmetric outer diameter, as described above.

This mold has gate holes through which a molten material is injected into the cavity. The gate holes are arranged so as to be rotationally asymmetric about the rotation axis of the pulley, for the purposes already described above.

The gate holes are designed such that not all of the gate holes have the same diameter, for the purposes already described above.

According to the present invention, periodicity is eliminated by making the outer diameter of the radially outer cylindrical portion of the pulley rotationally asymmetric, thereby preventing interference of a plurality of sounds produced from the pulley. Thus, it is possible to prevent beating sounds produced as a result of interference of a plurality of sounds, thereby ensuring quietness of the pulley while the pulley is rotating.

### BRIEF DESCRIPTION OF THE DRAWINGS

Other features and objects of the present invention will become apparent from the following description made with reference to the accompanying drawings, in which:
Fig. 1 is a side view of a bearing with a pulley embodying the present invention;
Fig. 2 is a perspective view of the bearing of Fig. 1;
Fig. 3 is a perspective view, partially in section, of an ordinary bearing with a pulley;
Fig. 4 is a sectional side view of a mold for forming a bearing with a pulley; and
Fig. 5 is a partial side view of an ordinary pulley.

### DETAILED DESCRIPTION OF THE PREFERRED EMBODIMENTS

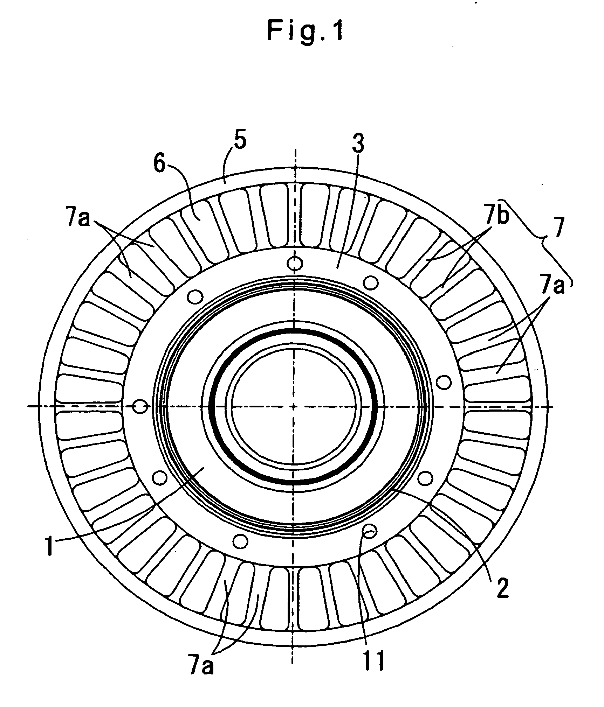

Figs. 1 and 2 show a bearing with a pulley according to the present invention. The bearing with the pulley comprises a rolling bearing 1, an radially inner cylindrical portion 3 fixed to an outer race 2 of the rolling bearing 1, a radially outer cylindrical portion 5 having a belt guide surface 4, a disk portion 6 formed between the radially inner and outer cylindrical portions 3 and 5, and a plurality of radial ribs 7 formed on the disk portion 6.

As shown in Fig. 4, the bearing with the pulley is manufactured in a pulley forming mold 9 formed with a cavity 8 having a shape complementary to the pulley. This mold 9 has six gate holes 10 at positions corresponding to the radially inner cylindrical portion 3 of the pulley. Molten resin is injected into the cavity 8 through the gate holes 10. The gate holes 10 are formed so as to be rotationally asymmetric around the rotation axis of the pulley.

In addition to the fact that the gate holes 10 are formed so as to be rotationally asymmetric, at least one or some of the gate holes 10 have a different diameter from other gate holes 10. With this arrangement, resin supplied through the respective gate holes 10 reaches positions in the cavity 8 corresponding to the radially outer cylindrical portion 5, not simultaneously, but with a time delay. Thus, the resins at the respective positions corresponding to the radially outer cylindrical portion 5 shrink at different rates, thus making the outer diameter of the radially outer cylindrical portion 5 rotationally asymmetric.

Also, not all the ribs 7 are equal in thickness to one another, but at least one or some (e.g. 7a of Fig. 1) are thicker than others (e.g. 7b of Fig. 1). Portions of the resin injected into the cavity through the gate holes 10 pass between the adjacent ribs 7 and are supplied to the radially outer cylindrical portion 5. Since not all the ribs 7 are equal in thickness, the portions of the resin that flow between thicker ribs 7 flow at a different speed from the portions of the resin that flow between thinner ribs 7. This makes the outer diameter of the radially outer cylindrical portion 5 rotationally asymmetric.

On one side of the radially inner cylindrical portion 3 of the pulley molded using this mold 9, injection marks 11 of resin injected through the gate holes 10 remain. The injection marks 11 positionally correspond to the respective gate holes 10. Thus, the injection marks 11 are arranged so as to be rotationally asymmetric, and also at least one or some of the injection marks 11 have a different diameter from other injection marks 11. Because these injection marks 11 do not serve any particular purpose, they may be removed by e.g. grinding or may be left as they are.

In the arrangement of Figs. 1 and 2, in order to provide a radially outer cylindrical portion 5 having a rotationally asymmetric outer diameter, the following three means are employed: (1) the gate holes 10 are arranged so as to be rotationally asymmetric; (2) at least one or some of the gate holes 10 have a different diameter from other gate holes 10; and (3) at least one or some of the ribs 7 have a different thickness from other ribs 7. But instead, not all three but only one or two of the above three means may be employed, because any one of the three means can independently achieve the object of the present invention.

Alternatively, in order to provide a radially outer cylindrical portion 5 having a rotationally asymmetric outer diameter, the radially outer cylindrical portion 5 may be ground or otherwise machined.

In the embodiment, the pulley is integral with the outer race 2 of the rolling bearing. But a rotary shaft may be directly fitted in the radially inner cylindrical portion 3 of the pulley. In this arrangement too, it is possible to suppress beating sounds of the pulley.

The bearing with the pulley shown e.g. in Fig. 1 includes 36 ribs 7 and nine gate holes 10. But their numbers are not limited provided the object of the invention is achieved. For example, the number of ribs 7 may not be a multiple of the number of the gate holes 10 (such as 32 ribs and 6 gate holes); or the number or ribs 7 may be a prime number, i.e. a number whose factors are only 1 and itself (such as 31 ribs and 7 gate holes).

## Claims

1. A method of manufacturing a pulley comprising a radially inner cylindrical portion (3) fixed to an outer race (2) of a rolling bearing (1), a radially outer cylindrical portion (5) having a belt guide surface (4), a disk portion (6) formed between the radially inner and outer cylindrical portions (3, 5), and a plurality of radial ribs (7) formed on the disk portion (6), wherein the radially outer cylindrical portion (5) has an outer diameter that is rotationally asymmetric about a rotation axis of the pulley, comprising the step of:
injecting a molten material into a mold (9) through gate holes (10) formed in the mold (9) so as to be rotationally asymmetric about the rotation axis and curing the molten material in the mold (9),
**characterized by** the step of:
injecting the molten material into a mold (9) through gate holes (10) being arranged such that at least one or some of the gate holes (10) have a different diameter from other gate holes (10).

2. A pulley formed by a method of claim 1, wherein the pulley has injection marks (11) positionally corresponding to the respective gate holes (10).

3. The pulley of claim 2, wherein the number of the ribs (7) is not a multiple of the number of the injection marks (11).

4. The pulley of claim 2, wherein the number of the ribs (7) is a prime number that is different from the number of the injection marks (11).

5. The pulley of any of claims 2 to 4, wherein not all of the ribs (7) have the same thickness.

6. The pulley of any of claims 2 to 5 which is made of a resin.

7. A rolling bearing with the pulley of any of claims 2 to 6, wherein the rolling bearing (1) includes an outer race (2), and wherein the pulley is integrally formed on the outer race (2) by injection-molding a resin.

8. A mold of implementing a method of claim 1, wherein said mold (9) has a cavity (8) the shape thereof being complementary to the pulley, wherein said mold (9) has gate holes (10) formed in the mold (9) so as to be rotationally asymmetric about the rotation axis and for injecting a molten material, and wherein at least one or some of the gate holes (10) have a different diameter from other gates holes (10).

## Patentansprüche

1. Herstellungsverfahren einer Riemenscheibe, aufweisend einen radial inneren zylindrischen Abschnitt (3), befestigt an einer äußeren Laufbahn (2) eines Kugellagers (1), eine radial äußeren zylindrischen Abschnitt (5) mit einer Riemenführungsoberfläche (4), einem Scheibenabschnitt (6), gebildet zwischen den radial inneren und äußeren zylindrischen Abschnitten (3), und eine Mehrzahl von radialen Rippen (7), gebildet an dem Scheibenabschnitt (6), wobei der radial äußere zylindrische Abschnitt (5) einen Außendurchmesser hat, der rotations- asymmetrisch um eine Rotationsachse der Riemenscheibe ist,
aufweisend den Schritt von:
Einspritzen eines geschmolzenen Materials in eine Form (9) durch in der Form (9) gebildete Anschnittöffnungen (10), um rotations- asymmetrisch um die Rotationsachse zu sein und Aushärten des geschmolzenen Materials in der Form (9),
**gekennzeichnet durch** den Schritt von:
Einspritzen eines geschmolzenen Materials in eine Form (9) **durch** Anschnittöffnungen (10), die derart angeordnet sind, dass zumindest eine oder einige der Anschnittöffnungen (10) einen von anderen Anschnittöffnungen (10) verschiedenen Durchmesser haben.

2. Riemenscheibe, gebildet durch ein Verfahren nach Anspruch 1, wobei die Riemenscheibe Einspritzmarkierungen (11) hat, die in der Position den jeweiligen Anschnittöffnungen (10) entsprechen.

3. Riemenscheibe nach Anspruch 2, wobei die Anzahl der Rippen (7) nicht ein Mehrfaches der Anzahl der Einspritzmarkierungen (11) ist.

4. Riemenscheibe nach Anspruch 2, wobei die Anzahl der Rippen (7) eine Primzahl ist, die von der Anzahl der Einspritzmarkierungen (11) verschieden ist.

5. Riemenscheibe nach Anspruch 2 bis 4, wobei nicht alle der Rippen (7) dieselbe Dicke haben.

6. Riemenscheibe nach einem der Ansprüche 2 bis 5, die aus einem Kunstharz hergestellt ist.

7. Kugellager mit der Riemenscheibe nach einem der Ansprüche 2 bis 6, wobei das Kugellager (1) eine äußere Laufbahn (2) enthält und wobei die Riemenscheibe auf der äußeren Laufbahn (2) durch Spritzgießen eines Kunstharzes einstückig ausgebildet ist.

8. Form zum Durchführen eines Verfahrens von Anspruch 1, wobei die Form (9) einen Formhohlraum (8) hat, dessen Form komplementär zu der Riemenscheibe ist, wobei die Form (9) Anschnittöffnungen (10), gebildet in der Form (9), hat, um rotations- asymmetrisch um die Rotationsachse zu sein und zum Einspritzen eines geschmolzenen Materials und wobei zumindest eine oder einige der Anschnittöffnungen (10) einen von den anderen Anschnittöffnungen (10) verschiedenen Durchmesser haben.

## Revendications

1. Procédé de fabrication d'une poulie comprenant une partie cylindrique radialement interne (3) fixée à une cage externe (2) d'un palier à roulement (1), une partie cylindrique radialement externe (5) comportant une surface de guidage de courroie (4), une partie de disque (6) formée entre les parties cylindriques radialement interne et externe (3, 5) et une pluralité de nervures radiales (7) formées sur la partie de disque (6), dans lequel la partie cylindrique radialement externe (5) possède un diamètre externe qui est asymétrique en rotation autour de l'axe de rotation de la poulie,
comprenant les étapes consistant à
injecter un matériau fondu dans un moule (9) par des trous d'entrée (10) formés dans le moule (9) de façon à être asymétrique en rotation autour de l'axe de rotation et faire durcir le matériau fondu dans le moule (9),
**caractérisé par** l'étape consistant à :
injecter le matériau fondu dans un moule (9) par l'intermédiaire des trous d'entrée (10) agencés de telle sorte qu'au moins un ou plusieurs des trous d'entrée (10) ait un diamètre différent de celui des autres trous d'entrée (10).

2. Poulie formée par un procédé selon la revendication 1, dans laquelle la poulie comporte des marques d'injection (11) correspondant en position aux trous d'entrée respectifs (10).

3. Poulie selon la revendication 2, dans laquelle le nombre de nervures (7) n'est pas un multiple du nombre de marques d'injections (11).

4. Poulie selon la revendication 2, dans laquelle le nombre de nervures (7) est un nombre premier qui est différent du nombre de marques d'injections (11).

5. Poulie selon l'une quelconque des revendications 2 à 4, dans laquelle toutes les nervures (7) n'ont pas la même épaisseur.

6. Poulie selon l'une quelconque des revendications 2 à 5, faite d'une résine.

7. Palier à roulement comportant la poulie selon l'une quelconque des revendications 2 à 6, dans lequel le palier à roulement (1) comporte une cage externe (2), et dans lequel la poulie est formée de manière intégrée sur la cage externe (2) par moulage par injection d'une résine.

8. Moule pour mettre en oeuvre un procédé selon la revendication 1, dans lequel ledit moule (9) comporte une cavité (8), sa forme étant complémentaire à celle de la poulie, dans lequel ledit moule (9) comporte des trous d'entrée (10) formés dans le moule (9) de façon à être asymétrique en rotation autour de l'axe de rotation et pour injecter un matériau fondu, et dans lequel au moins un ou certains des trous d'entrée (10) ont un diamètre différent de celui des autres trous d'entrée (10).
